# EUROPEAN PATENT APPLICATION

(11) **EP 4 024 933 A1**
(43) Date of publication of application: **06.07.2022**
(21) Application number: 21150019.4
(22) Date of filing: 04.01.2021
(51) Int. Cl.: H04W 12/122, H04W 36/08

(54) **ENHANCED MECHANISM FOR DETECTING FAKE BASE STATION ATTACKS**

(71) Applicant: Koninklijke Philips N.V., 5656 AE Eindhoven (NL)
(72) Inventor: GARCIA MORCHON, Osar, Eindhoven (NL); DEES, Walter, Eindhoven (NL); GONZALEZ TEJERIA, Jesus, Eindhoven (NL)
(74) Representative: Philips Intellectual Property & Standards

(57) **Abstract**

In cellular or other wireless networks, false or fake base stations (FBS) behave as proper base stations managed by the network operator and aim at attracting wireless communication devices with different goals including FBS or man-in-the-middle (MitM) attacks. To detect and/or avoid such FBS or MitM attacks, it is proposed to randomize resource allocation and have a real base station (RBS) check that a wireless communication device (e.g. UE) has not transmitted in other resources and only transmits in the allocated resources.

## Description

### FIELD OF THE INVENTION

The invention relates to security technology for fake or false base station (FBS) attacks or man-in-the-middle (MitM) attacks in wireless communication networks, such as - but not limited to - cellular communication networks.

### BACKGROUND OF THE INVENTION

Many wireless communication systems use access devices (such as base stations, Node Bs (eNBs, eNodeBs, gNBs, gNodeBs, ng-eNBs, etc.), access points or the like) to provide geographical service areas where wireless communication devices (e.g. end devices or terminal devices such as mobile stations or user equipment (UE)) communicate with an access device serving a particular geographical service area in which the terminal devices are located. The access devices are connected within a network allowing communication links to be made between the wireless communication devices and other devices.

In such telecommunication systems, the wireless communication devices can access different types of services including voice and data services through access devices that are deployed in field. The network access devices are connected to a core network (CN) - managed by a network operator - that controls the telecommunications systems and orchestrates the delivery of services.

Throughout the present disclosure, the terms "false base station" or "fake base station" (FBS) is used in general to denote wireless devices that impersonate genuine or real base stations (RBS) or other types of genuine or real network access devices.

Attackers have used FBS devices to attack wireless communication devices in many ways. An FBS behaves as a proper base station managed by the network operator and aims at attracting wireless communication devices with different goals, such as performing Denial-of-Service (DoS) attacks to block network access, retrieving private user data, perform Man-in-the-Middle (MitM) attacks and subsequent attacks (active cryptographic attacks (aLTEr), impersonation attacks (imp4gt), network misconfiguration, etc.), performing authentication relay attacks, performing Self-Organizing Networks poisoning attacks, sending fake public warning information, or the like.

An FBS may be an International Mobile Subscriber Identity (IMSI) catcher. However, FBS capabilities vary depending upon whether the mobile network is based on General Packet Radio services (GPRS), Universal Mobile Telecommunications System (UMTS), Long Term Evolution (LTE), or 5G. The 5G system in particular has already made significant improvements to combat the FBS problem, like subscription permanent identifier (SUPI) concealment, guaranteed global unique temporary identifier (GUTI) refreshment, protected redirections, and a general informative detection framework. There are also other security features that the 5G security inherited from earlier generations like mutual authentication between UE and network, integrity protected signalling, and secure algorithm negotiations.

Further details on protection measures can be gathered from 3GPP specification TR 33.809 *"Study on 5G Security Enhancement against False Base Stations (FBS)".* Moreover, studies on security solutions, constraints and requirements are disclosed in 3GPP specification TR 33.969 *"Study on Security aspects of Public Warning System (PWS)".*

Such telecommunication systems are also further evolving so that the wireless communication devices do not only have access to the CN via a real base station (RBS), but also via other relay devices. For instance, a remote UE (i.e., a UE that cannot reach an RBS directly) uses a relay UE (i.e., a UE that is connected to the CN either via other UE or via the RBS) to connect to the CN. In such a communication scenario, a MitM device might be, e.g. a relay UE that forwards communication between a remote UE and the RBS. However, proposed solutions for detection of MitM attacks may not be feasible since allocated resources can be predicted by the MitM attacker and/or beamforming is not always available. It is thus still desirable to augment available security features in wireless communication systems so that the risk caused by FBS-based attacks can be further minimized.

### SUMMARY OF THE INVENTION

It is an object of the present invention to provide an enhanced mechanism for detecting and/or avoiding FBS attacks.

This object is achieved by an apparatus as claimed in claim 1, by a network device as claimed in claim 13, by an attack detection system as claimed in claim 14, by a method as claimed in claim 15, by a computer program product as claimed in claim 16 and by a network system as claimed in claim 17.

According to a first aspect, an apparatus is provided for detecting a presence of or an attack by a fake wireless device that impersonates a genuine or real access device in a wireless network, wherein the apparatus comprises:
a randomizer for randomizing an allocation of at least one communication resource and/or identifier used for communicating with a wireless communication device; and
an attack checking unit for checking if transmissions received from the wireless communication device have used the at least one communication resource and/or identifier, e.g. and no other ones, allocated by the randomized allocation and for determining a presence of or an attack by a fake wireless device based on a result of the checking.

According to a second aspect, a method of detecting an attack by a fake wireless device that impersonates a genuine or real access device in a wireless network is provided, wherein the method comprises:
randomizing an allocation of at least one communication resource and/or identifier used for communicating with a wireless communication device; and
checking if transmissions received from the wireless communication device have used the at least one communication resource and/or identifier allocated by the randomized allocation; and
determining a presence of or an attack by a fake wireless device based on a result of the checking.

According to a third aspect, a network device (e.g. an access device, such as a base station, gNB, access point etc., or a relay device or a core network device) for a wireless network is provided, which comprises an apparatus of the first aspect. Thus, the randomized allocation of resources/identifiers can be implemented at the access device or other network devices, such as core network devices or relay devices.

According to a fourth aspect, an attack detection system comprising a network device of the third aspect and a wireless communication device is provided, wherein the wireless communication device is configured to detect the allocated at least one communication resource and/or identifier and to apply the detected at least one communication resource and/or identifier for communication with the network device. The logic for presence or attack detection might also be provided in various network devices. For instance, in the CN. In an example, the access device (e.g. base station) may just send statistics of the communication (e.g., whether messages arrive a bit late), while a network device of the CN could run a logic to detect whether an attack is present by correlating information associated to several wireless communication devices.

Finally, according to a fifth aspect, a computer program product is provided, which comprises code means for producing the steps of the above method of the second aspect when run on a single or multiple distributed computer devices.

Finally, according to a sixth aspect, a network system is provided, which comprises two or more distributed network devices configured to jointly perform the steps of the method of the second aspect. Thus, the proposed solution can be executed by two different network devices, such as an access device (e.g. base station or gNB) and relay device (e.g. RelayUE).

Accordingly, the proposed allocation of at least one randomized communication resource and/or identifier ensures that an attacker is not able to monitor an expected behaviour of an access device or wireless communication device to derive allocated resources and/or identifiers, so that a MitM device or a MittM attack can be readily detected. Furthermore, this prevents attackers from being able to profile the communication patterns of wireless communication devices.

It is noted that proposed randomized allocation may be based on a true random number generator (e.g., using a physical process such as thermal noise to generate the random numbers) or by extracting pseudo-random numbers from a secure pseudo-random number generator (e.g., SHAKE (SHA3)) and/or a seed, where the seed has been obtained from a true random number generator.

According to a first option which may be combined with any of the above first to sixth aspects, the randomizer may be configured to compute at least one random parameter value, e.g., uniformly distributed, in a respective predetermined value range and to allocate a time or frequency resource (e.g. a subsequent frame, a subsequent slot or a subsequent frequency range) for the communication with the wireless communication device based on the computed at least one parameter value. This provides an efficient randomization option that can be easily implemented with little hardware effort.

According to a second option which may be combined with the first option or any of the above first to sixth aspects, the randomizer may be configured to determine a random waiting time, wherein the apparatus may be configured to send a resource activation message to the wireless communication device after expiry of the random waiting time, and wherein the attack checking unit may be configured to check based on a timer function if a direct response from the wireless communication device has been received. Thereby, the proposed attack detection approach can be implemented based on a single message from the wireless communication device to the access device.

According to a third option which can be combined with the first or second option or any of the above first to sixth aspects, the attack checking unit may be configured to check if the received direct response comprises a downlink control information included in the resource activation message. Thereby, the reception time as well as the content of the received response can be used for checking an FBS or MitM attack.

According to a fourth option which can be combined with any of the first to third options or any of the above first to sixth aspects, the apparatus may be configured to transmit the allocated at least one communication resource and/or identifier in a protected message, (e.g., an encrypted message). This measure provides the advantage that an attacker cannot derive the allocated communication resource(s) or identifier(s) by analyzing a related message used for their conveyance.

According to a fifth option which can be combined with any of the first to fourth options or any of the above first to sixth aspects, the allocated at least one communication resource comprises at least one of a random time domain offset value, a random time domain allocation value and a random frequency domain allocation value to be used for a response by the wireless communication device. These specific randomized values provide an effective way to secure transmissions against FBS or MitM attacks.

According to a sixth option which can be combined with any of the first to fifth options or any of the above first to sixth aspects, the time domain offset value may indicate a time offset relative to a system frame number (SFN) from which the wireless communication device might start transmitting. The attack checking unit may be configured to monitor that no response message is received from the wireless communication device before or after the expected transmission time. Thereby, the randomization is achieved in an efficient manner by signaling a random offset relative to frame number.

According to a seventh option which can be combined with any of the first to sixth options or any of the above first to sixth aspects, at least one of the time domain allocation value and the frequency domain allocation value points to a row or column of a look-up table. This provides an efficient way to achieve additional randomized resource allocation by simply referring to rows or columns of look-up table(s) in which resource information is stored.

According to an eighth option which can be combined with any of the first to seventh options or any of the above first to sixth aspects, the attack checking unit may be configured to perform the checking operation after a security establishment when the wireless communication device is connecting (e.g. establishes a secure connection with) to the wireless network or after a handover of the wireless communication device. Thereby, it can be ensured that FBS or MitM attacks can be detected whenever a new connection is established.

According to a ninth option which can be combined with any of the first to eighth options or any of the above first to sixth aspects, the randomizer may be configured to determine a random seed value to be forwarded to the wireless communication device in a protected (i.e., encrypted and/or integrity protected) manner for assigning communication resources (e.g., a time slot or a frequency range) for a response message based on a pseudo-random sequence. Thus, an efficient way of signaling an allocated time slot or frequency range in a secure manner can be provided.

According to a tenth option which can be combined with any of the first to ninth options or any of the above first to sixth aspects, the randomizer may be configured to determine at least one list of random temporary network identifiers (e.g. RNTIs) or a random seed value for deriving pseudo-random temporary network identifiers by means of a pseudo-random function, wherein the apparatus is configured to forward the at least one list of random temporary network identifiers or the random seed to the wireless communication device in a protected manner for selection of random temporary network identifiers in subsequent transmissions, and wherein the attack checking unit may be configured to determine the attack by a fake wireless device based on a received random temporary network identifier, in particular, if it is used in a correct order or in a predefined instant of time. This measure provides an efficient way of detecting an FBS or MitM attack by using randomized temporary network identifiers.

According to an eleventh option which can be combined with any of the first to tenth options or any of the above first to sixth aspects, the randomizer may be configured to determine a first list of random temporary network identifiers to be used by the wireless communication device and a second list of temporary network identifiers to be used by the apparatus. This provides the advantage that both connection ends (i.e. wireless communication device and access device) can easily check if a correct temporary network identifier has been received.

It is noted that the above apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the network device of claim 13, the attack detection system of claim 14, the method of claim 15, the computer program product, and the network system may have similar and/or identical preferred embodiments, in particular, as defined in the dependent claims.

It shall further be understood that the apparatus of claim 1, the network device of claim 13, the attack detection system of claim 14, the method of claim 15 could refer or be executed on a single or multiple distributed network devices.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a network architecture in which the present invention can be implemented;
Fig. 2 schematically shows a block diagram of an enhanced access device according to various embodiments;
Fig. 3 schematically shows a signaling and processing diagram of an FBS detection procedure according to a first embodiment;
Fig. 4 schematically shows a signaling and processing diagram of an FBS detection procedure according to a second embodiment with and without MitM attack;
Fig. 5 schematically shows a more detailed signaling and processing diagram of the FBS detection procedure according to the second embodiment without MitM attack;
Fig. 6 schematically shows a more detailed signaling and processing diagram of the FBS detection procedure according to the second embodiment with MitM attack;
Fig. 7 schematically shows a signaling and processing diagram of an FBS detection procedure according to a third embodiment with and without MitM attack; and
Fig. 8 schematically shows a signaling and processing diagram of an implementation example of the FBS detection procedure according to the third embodiment.

### DETAILED DESCRIPTION OF EMBODIMENTS

Embodiments of the present invention are now described based on a radio resource control (RRC) signaling for 5G cellular networks.

Throughout the present disclosure, the abbreviation "gNB" (5G terminology) is intended to mean access device such as a cellular base station or a WiFi access point. The gNB may consist of a centralized control plane unit (gNB-CU-CP), multiple centralized user plane units (gNB-CU-UPs) and/or multiple distributed units (gNB-DUs). The gNB is part of the radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

An element for implementing scheduling mechanisms is the Radio Resource Control (RRC) protocol which can operate end-to-end to wireless communication devices ("UEs" in 5G terminology).

Another element for implementing scheduling mechanisms may be control elements (CEs) of the Media Access Control (MAC) protocol, which are short elements (or information elements (IEs)) inserted between existing uplink (UL), downlink (DL) or sidelink (SL) transmissions over the MAC layer, used to efficiently signal certain events, measurements or configurations. Further MAC CEs may be used by the access device (e.g. gNB) to control the behaviour of the communication device (e.g. UE) when executing various other 3GPP mechanisms such as Channel State Information (CSI) reporting, Sounding Reference Signals (SRS), or Discontinuous Reception (DRX).

A further element may be the use of a downlink control information (DCI), which is a short message sent in a low-bitrate control channel (e.g. Physical Downlink Control Channel (PDCCH)) with a special blindly detectable modulation or coding. This mechanism is implemented at the physical protocol layer (PHY L1) and does not need to use the MAC PDU header structure. Here, various DCI formats can be defined with different information content. Communication resources for dynamic scheduling can be indicated in the DCI.

3GPP specification TS 33.501 discloses how the network can use information sent in measurement reports in RRC_CONNECTED mode to perform UE-assisted network-based detection of a false or fake base station (FBS). Moreover, the initially mentioned 3GPP specification TR 33.809 discloses study results of the FBS issue and discusses different solutions to avoid/detect FBS and MitM attackers.

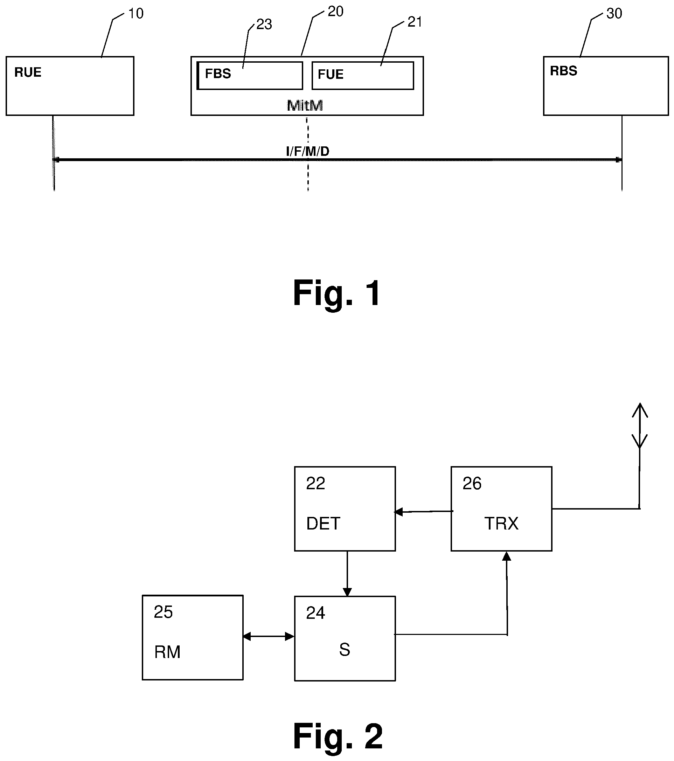

Fig. 1 schematically shows a network architecture with a MitM attacker system 20 located between a real UE (RUE) 10 and a real base station (RBS) 30 (e.g. gNB). It is however noted that the RBS 30 could as well be a relay device (such as a relay UE).

The MitM attacker system 20 may comprise an FBS 23 which is a base station (e.g. gNB) operated by an attacker that aims at attracting UEs to disrupt their normal operation. Furthermore, the MitM attacker system 20 may comprise a fake UE (FUE) 21 and may be located between the RUE 10 and the RBS 30. Since the MitM attacker system 20 forwards the communication, the FUE 21 can establish a connection with a core network (not shown) via the RBS 30. Then, it can perform further actions including interception (I), forwarding (F), manipulation (M) or dropping (D) of messages exchanged between the RUE 10 and the RBS 30.

Fig. 2 schematically shows a block diagram of an enhanced access device according to various embodiments.

It is noted that only those blocks relevant for the proposed MitM detection function are shown in Fig. 2. Other blocks have been omitted for reasons of brevity.

According to various embodiments, it is proposed to implement randomized communication parameters, e.g., randomized transmission resources or randomized communication identifiers to allow detection and/or avoidance of MitM attacks. As a result, to detect and/or avoid FBS attacks, a randomized resource allocation is achieved and the RBS can check that a wireless communication device (e.g. UE) has not transmitted in other resources and only transmits in the allocated randomized resources.

The access device of Fig. 2 may correspond to the RBS (e.g. gNB or a relay device) of Fig. 1 or any other type of access device for any wireless network.

According to Fig. 2, the access device comprises a transceiver unit (TRX) 26 for transmitting and receiving wireless messages and/or other wireless signals via an antenna. Messages with randomized communication resources and/or identifiers (randomized resource allocation) are created and/or signaled by a scheduler (S) 24 based on a randomization function or randomizer (RM) 25 which may be a separate unit or an integrated part of the scheduler 24. The scheduler 24 is expected to take care for a good agreement between resource allocations and recommended bit rate values that it sends to UEs. The randomized resource allocation may be generated or signaled in response to a trigger event generated by a detector unit (DET) 22 when it detects a triggering message received via the transceiver unit 21 from a wireless communication device (e.g. RUE 10 in Fig. 1). Furthermore, the detector unit 22 is configured to detect or determine an FBS or MitM attack based on an analysis of received messages.

Furthermore, the randomizer 25 may comprise a memory with a look-up table which provides a mapping table for generating pseudo randomized output values, as explained later.

In examples, the proposed randomized resource allocation can be achieved by introducing a random waiting time, allocating a frame number (e.g. system frame number (SFN)), subframe, or transmission slot(s), or frequency resources, or temporal network identifier in a random or at least random looking and/or secure fashion.

In an example, the exchange of the proposed randomized communication parameters can be done in a secure manner. Communications performed in a secure manner are intended to be protected, where protected can include multiple security properties such as "encryption" or "integrity protection".

Thereby, a MitM attacker is no longer able to predict when a wireless communication device is going to transmit data, since the allocated resources follow a random or at least random looking pattern.

According to various embodiments, the randomized resource allocation may be applied in connection with various communication protocol options, such as the RRC protocol (where RRC messages may in turn be transported over Packet Data Convergence Protocol (PDCP), over Radio Link Control (RLC) and/or over MAC protocol over potentially multiple hops with the benefit that reliability of transport is guaranteed (via PDCP, using retransmissions) and integrity protection may be applied), or PDCP control or data packet data units (PDUs).

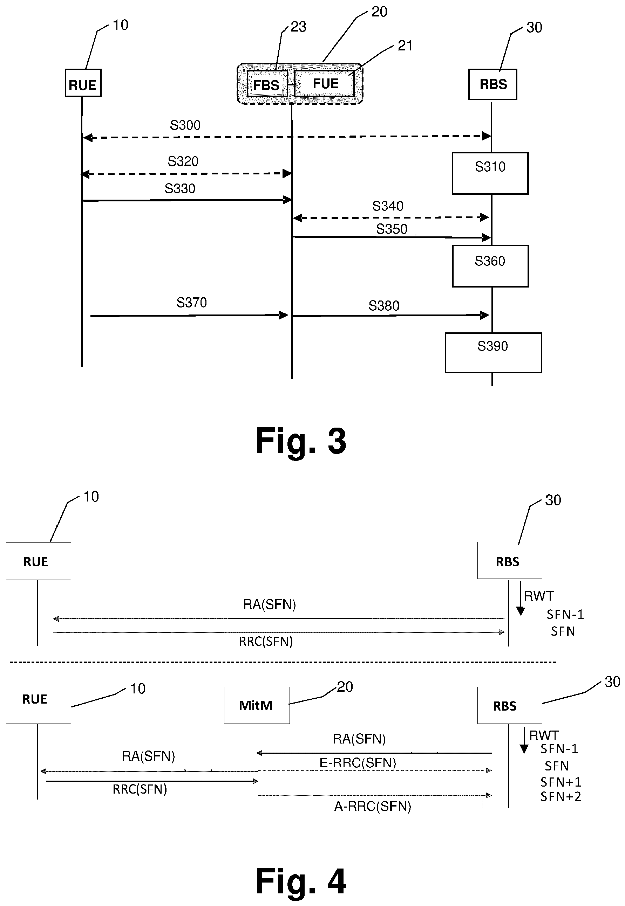

Fig. 3 schematically shows a signaling and processing diagram of an FBS detection procedure according to a first embodiment.

In the signaling and processing sequence of Fig. 3 and the signaling and processing sequences of subsequent Figs. 4 to 9, the vertical direction from the top to the bottom corresponds to the time axis, so that messages or processing steps shown above other messages or processing steps occur at an earlier time. Involved devices are a real UE (RUE) 10, an MitM attacker system 20 (e.g., comprising a fake base station (FBS) 23 (e.g. gNB) and a fake UE (FUE) 21) and a real base station (RBE) 30 (e.g a gNB).

In an initial step S300, the RUE 10 establishes a connection with the RBS 30 through the MitM attacker system 20 and an RRC security is established. This is followed by a resource allocation step 320 which involves an allocation time and/or frequency resources, e.g, a first set of SFN parameters SFN1 (e.g., system frame number, subframe number and slot) by the FBS 23.

Furthermore, in a parallel, subsequent or preceding step S310 following the initial step S300, the RBS 30 (e.g. the randomizer 25 in Fig. 2) calculates a random allocation parameter r (e.g. in the range between 0 and N-1, where N is an integer number, e.g., 10240) for a subsequent time resource allocation in step S340.

In step S330, the RUE 10 initiates a communication process by sending an RRC message to the RBS 30. For simplicity, a null RRC message could be transmitted.

In step S350, the FUE 21 of the MitM attacker system 20 forwards the RRC message to the RBS 30. Similarly, the RBS 30 has previously allocated in step S340 a second set of time and/or frequency resources, e.g., SFN parameters SFN2 (e.g., system frame number, subframe number and slot) to the FUE 21.

Note that the second set of SFN parameters SFN2 allocated by the RBS 30 does not need to be equal to the first set of SFN parameters SFN1 allocated by the FBS 23 in step S320 since the RBS 30 (e.g. the scheduler 24 of Fig. 2) allocates in step S330 the next transmit slot by using the random allocation parameter r (uniformly distributed in the range 0,...,N-1 and calculated in step S310) to determine e.g. frame number r/10 and subframe number r%10. Here, the symbol "/" means integer division, e.g., "125/10" is equal to 12. Further, the symbol "%" means the modulus operator that returns the remainder of an integer division, e.g., "125%10" is equal to 5. Thus, if N=10240 is selected, the collision probability is 1/10240, i.e. the detectability of an MitM attack is larger than 99.99%, as 1024 possible system frame numbers, and ten subframe numbers can be allocated.

It is further noted that the FBS 23 is not able to modify the second set of SFN parameters SFN2 controlled by the RBS 30. Moreover, the FBS 23 cannot reschedule the earlier allocated first set of SFN parameters SFN1. If the MitM attacker system 20 does not support step S330 then it cannot forward the RRC message in step S350 in the allocated resources. This means that new SFN2 resources would need to be allocated, which would cause an SFN2 rescheduled or connection time out.

In step S360, the RBS 30 stores the set of SFN parameters SFN2 it allocated. Note that the RBS 30 could only store the first set of SFN parameters (including any time and frequency resources) it has allocated.

In a subsequent step S370, the RUE 10 sends the first set of SFN parameters SFN1 it has received in a protected message (e.g., an RRC message security protected from the FBS 23), and the FBS 23 forwards the RRC message via the FUE 21 to the RBS 30 at step 380.

Finally, in step S390, the RBS 30 (e.g. the detector unit 22 in Fig. 2) compares the first set of SFN parameters SFN1 with the second set of SFN parameters SFN2 to determine whether an FBS or MitM attacker is involved in the transmission. The RBS 30 determines the presence of a MitM system or device if SFN1 and SFN2 do not match, or if no message has been received in step S380.

The proposed introduction of the randomized resource allocation by the at least one random allocation parameter ensures that the scheduling process (e.g. allocation of a time slot and/or frequency once RRC security is established) by the RBS 30 is no longer predictable for the MitM attacking system 20 by monitoring the operation of the RBS 30. If the MitM attacking system 20 allocates the time slot before the RBS 30 does, then the allocated first set of SFN parameters SFN1 allocated will not match with the second set of SFN parameters SFN2 assigned by the RBS 30.

As an exemplary option to decrease the waiting time for the allocated time slot, the RBS 30 can pick up a smaller value N, (e.g., N = 2560 to reduce the waiting time to a maximum of 2.56s). However, this increases the probability of having a collision between the first and second parameter sets SFB. To further decrease this probability again, the RBS 30 (e.g. randomizer 25 in Fig. 2) can compute multiple random parameters, e.g., an additional random allocation parameter r' uniformly distributed in the range 0,...,N'-1. This allocation parameter r' may be used for random allocation of the frequency resources used in the transmission.

Note that Fig. 3 shows an example of a resource allocation for a dynamic grant (uplink).

Fig. 4 schematically shows a signaling and processing diagram of an FBS detection procedure according to a second embodiment. The upper part of Fig. 4 above the dotted line shows the procedure without MitM attack and the lower part of Fig. 4 below the dotted line shows the procedure with MitM attack.

In the second embodiment, instead of requiring two RRC messages (e.g. steps S330 and S370 in Fig. 3) from the RUE 10 to confirm the used SFN value(s), it is enough to use a single RRC message. Namely, in a single responsive RRC message *RRC(SFN),* the RUE 10 includes the allocated set of SFN parameters.

However, the second embodiment is still configured to achieve a random or random looking resource allocation by the RBS 30, as follows:
The upper part of Fig. 4 shows that the RUE 10 replies immediately after (i.e. in direct response to) a resource allocation *RA(SFN)* by the RBS 30. The resource allocation by the RBS 30 is randomized by signaling or triggering it at a time SFN-1 after a random waiting time RWT determined by the RBS 30 (e.g. by the randomizer 25 in Fig. 2). The RBS 30 can thus verify the validity of the RRC message received from the RUE 10 based on its expected time of receipt SFN (e.g., at the immediately following system frame number (SFN)).

The lower part of Fig. 4 shows the resultant effect of a presence of a MitM attacking system 20. As can be gathered from the lower part of Fig. 4, the additional delay introduced by the forwarding process at the MitM attacking system 20 leads to the result that the expected RRC message *E-RRC(SFN)* of the RUE 10 is not timely received at the RBS 30 (i.e., at a time SFN when it was expected by the RBS 30). The available RRC message *A-RRC(SFN)* forwarded via the MitM attacking system 20 will be received by the RBS 30 at a later time SFN+2 which is too late. This can be detected at the RBS 30 to determine an FBS or MitM attack. In Fig. 4, and other embodiments, SFN-1, SFN, SFN+1 and SFN+2 can mean specific values of a system frame number but they can also mean a specific set of time and frequency resources, e.g., for the very same system frame number. For instance, they can mean subsequent subframes or timeslots, or Orthogonal Frequency Division Multiplexing (OFDM) symbols or frequency resources. In general, the term "SFN" as used in the present disclosure can refer to the system frame number, but it can also refer to a specific starting time slot within a specific subframe and frame when using specific frequency resources. In particular, it can refer to the allocated resource block containing a number of resource elements.

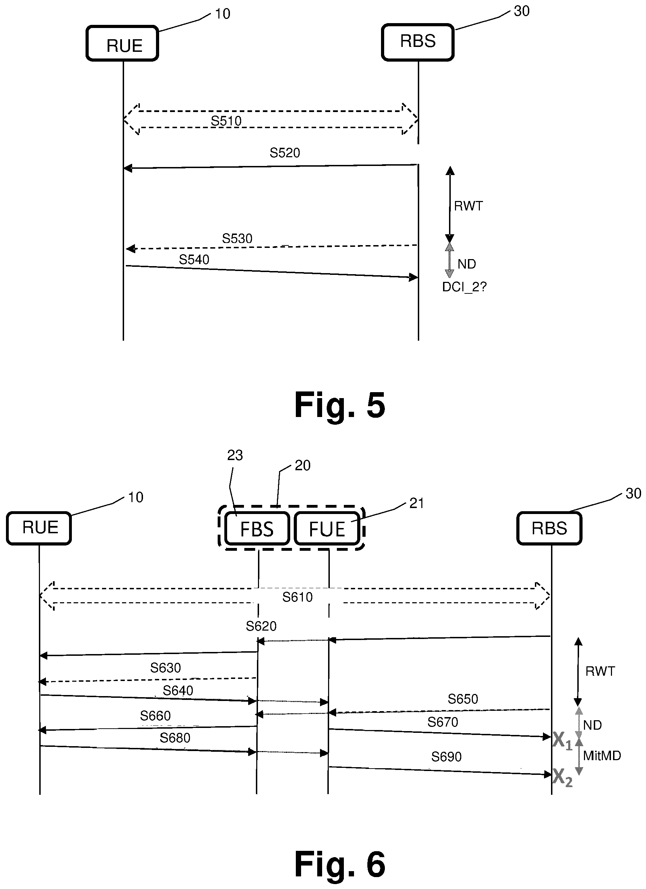

Fig. 5 schematically shows a more detailed signaling and processing diagram of the FBS detection procedure according to the second embodiment without MitM attack.

In Fig. 5, the first step S510 is that the RUE 10 and the RBS 30 have established access stratum (AS) security so that RRC messages can be exchanged in a secure way. In the next step S520 after AS security establishment, the RBS 30 allocates resources to the RUE 10 for the uplink, e.g., by means of a resource allocation of type configured grant type 2. This means that the allocated resources are sent in a secure RRC message to the RUE 10.

Then, the RBS 30 (e.g. a timer function of the randomizer 25 in Fig. 2) randomizes the resource allocation process by generating and applying a random waiting time RWT, after which the RBS 30 sends in step S530 a DCI message to activate the allocated resources. Additionally, the RBS 30 starts a timer to determine a maximum waiting time until an answerfrom the RUE 10 is validly received. Upon reception of the DCI message transmitted by the RBS 30 in step S530, the RUE 10 will immediately (i.e. directly responsive) reply in step S540 with a protected message including the received DCI message and/or other relevant information related to the resource allocation or timing, in particular, the time (denoted as SFN2) allocated for the first reply message and the overall allocated resources and/or the RNTI value used for scrambling the DCI message. The RBS 30 then merely has to check whether this reply message of step S540 contains the correct information and whether it has been received before the running timer for the maximum waiting time has expired or not.

Fig. 6 schematically shows a more detailed signaling and processing diagram of the FBS detection procedure according to the second embodiment with MitM attack. Other information included in the reply message of step S540 may for example be the RNTI value used for scrambling the DCI message or the Timing Advance of the base station that has allocated/triggered the semi-persistent schedule/uplink grant and/or the SFN at which the semi-persistent schedule/uplink grant was received.

As can be gathered from Fig. 6, all messages are slightly delayed due to the processing time introduced by the MitM attacking system 20. If, after security establishment in step S610 and secure resource allocation in step S620, the FBS 23 of the MitM attacking system sends a first DCI message earlier in step S630, then the MitM attacking system 20 can cache the response with resources including the time SFN1 from the RUE 10 received in step S640 and can have it ready for the time when the second DCI message arrives from the RBS 30 in step S650. Thus, the MitM attacking system 20 can send the cached response with the resources including the time SFN1 to the RBS 30 in step S670. However, the contents (resources including the time SFN1) of the response received at the RBS 30 after a normal delay (ND) before expiry of the timer for the maximum waiting time will then be wrong (indicted by "X₁" in Fig. 6).

Otherwise, if the FBS 23 of the MitM attacking system 20 waits until it has received the second DCI message from the RBS 30 in step S650 and then forwards it to the RUE 10 in step S660, then the response with the resources including the SFN2 received from the RUE 10 in step S680 and forwarded to the RBS 30 in step S690 includes a delay (MitMD) added by the MitM attacking system 20 and therefore arrives too late, i.e., after the timer for the maximum waiting time at the RBS 30 has expired (indicated by "X₂" in Fig. 6).

Thus, a randomized resource allocation is obtained by introducing the randomized waiting time RWT from the sending of the first message with the allocated resources by the RBS 30 in step S520/S620 to the point in time in which the second message that activates the allocated resources is sent by the RBS 30 in step S530/S650. As the time is randomized, the MitM attacking system 20 is not able to monitor an expected behavior of the RBS 30 when sending these two messages. The MitM attacking system 20 cannot derive a fixed delay time (e.g. 20ms) after the sending of the first message and thus cannot configure an SFN clock of the MitM attacking system 20 to be earlier by the derived amount (e.g. 20 ms).

By introducing the randomized waiting time, the communication between the RUE 10 and the RBS 30 can be blocked for some time. As an example, the waiting time can be randomized in time range long enough to prevent the MitM attacking system 20 from guessing this time properly.

Note that a MitM system might try to modify the timing advance by delaying the messages from its FUE 21 to the RBS 30. In 4G systems, this can mean a difference of up to 1282 ^{∗} 0.52µs = 0.66ms, which corresponds to a distance of around 100 km. However, in 4G/5G systems, the cells are dimensioned to be much smaller, in particular, small cells, typically limited to a few hundred meters. Thus, in these cells, the maximum timing advance that is feasible is limited to 0.0066ms (1/100). If the RBS 30 detects a much larger timing advance in this or the other embodiments, this will be a direct indication of the presence of a MitM system 20. For bigger cells, the RBS 30 can request the location of the RUE 10 as a way to determine whether the timing advance is correct or not, since the timing advance value is directly related to the distance between RUE 10 and the RBS 30. It is also noted that if the MitM system 20 is in between the RUE 10 and the RBS 30, the MitM system 20 is likely to be required to receive the whole radio frame before the MitM system 20 can forward it. If this is the case, then it is better to place the messages using a subcarrier spacing frequency (e.g., 15 kHz) and several symbols (e.g., 7 symbols). It has been verified that this may lead to a latency of 1.071ms, so that even if the timing advance value is modified at its maximum value of 0.66ms, this is still smaller compared to the processing time of the data packet itself so that the presence of the MitM system 20 cannot be hidden.

Further to the considerations in the previous paragraph, the following exemplary counter measures can be introduced to enhance robustness of the proposed solution:
1. Sending the waiting time by the RBS 30 in a secure RRC message and letting the RUE 10 generate spurious protected (RRC) messages during the waiting time. This prevents the MitM system 20 from guessing exactly which messages are the ones involved in the procedure and which ones to manipulate.
2. Providing a very precise time alignment between the RBS 30 and the RUE 10 using the initial RRC message. The secure RRC message from the RBS 30 could include the SFN value in which the RBS 30 sends the RRC message to the RUE 10, the resources (subframe, slots, frequency) used for its transmission, and also the timing advance that the RBS 30 has calculated for that RUE 10 as part of the encrypted RRC message. Hence, the FBS 23 would have to send this message using exactly the same SFN, and resources and same timing advance as the RBS 30 towards the RUE 10. The RUE 10 could signal an error in its reply message if during the waiting time, the SFN skips a few values or the timing advance is significantly changed (e.g. in comparison to the movement/speed of the UE) and/or if the second DCI message is not received exactly at the correct time.
3. Including in the above response message of step S540 of Fig. 5 the latest timing advance in its payload to make sure it matches with the current RBS's timing advance.
4. Preventing the RUE 10 from performing retransmissions in case of packet failure in sending the reply message. If a packet transmission failure is detected, the protocols should time-out, and the RBS 30 could restart the process for MitM detection and avoidance.
5. Preventing the RBS 30 from retransmitting messages in step S530 of Fig. 5, if they are not received properly. If a packet transmission failure is detected, the protocols should time-out, and the RBS 30 could restart the process for MitM detection and avoidance.
6. If the RUE notices in step S530 of Fig. 5 many messages in a short time frame (e.g. because the FBS 23 could be trying during the random time interval to get the right message from the RUE 10 at the right time) to activate the configured grant schedule, the RUE 10 could either de-attach from the RBS 30 and/or notify the RBS 30 through a protected message about suspicious activity.
7. By letting the UE and/or RBSs in vicinity of the RUE (according to the latest location estimate for that RUE, which may be retrieved from the core network's location service, or according to the latest distance measurement for that RUE, e.g. based on round trip time measurements) send (narrowband) signals at a very low frequency with maximum transmit power using an omnidirectional antenna transmission. This may be a narrowband pulse (e.g. similar to a Scheduling Request (SR)), but potentially encoding multiple bits from the current SFN value or real-time clock to signal the current time in use by the RBS and RUE. The RBS or the RAN or the core network to which the UE is connected may instruct other base stations in vicinity (potentially from different operators), to synchronize their clocks and/or send the same signal.
   The timing of this signal could be according to the configured grant schedule that has been sent from the RBS to the RUE through a secure RRC message. In case the RUE sends the signal (e.g. to send some bits of its SFN value or repeating part of the RRC message that was sent before), the configured grant schedule may be extended with a field to indicate the transmit power, which may override any transmit power control potentially received from a MitM. The RBS or the RAN or the core network to which the RUE is connected may instruct other base stations in vicinity (potentially from different operators), to listen for this signal. Since this signal will carry along a very long distance, it may be directly received by one of the genuine base stations. If a MitM would repeat or manipulate such signals, this can be detected by the RUE or one or more base stations which may inform each other.
   Additionally, these messages can also be protected if they refer to a one-to-one communication between RUE and RBS. The message sent by the RBS can also be signed to ensure source authentication.

In the second embodiment, the minimum delay between the messages in steps S530 and S540, i.e., the minimum delay between the DCI transmission on the PDCCH channel and the corresponding PUSCH channel may need to be considered. Note that this consideration also applies to other embodiments, e.g., to the first embodiment. I.e., the minimum delay between PDCCH and PUSCH that can be scheduled, if the default time domain resource allocation table is used, is 0.375ms for SCS (Sub-Carrier Spacing) 120kHz; for 15kHz the minimum delay is 1ms.

When considering the delay between PDCCH and PUSCH, it may be better if it is as small as feasible so that the MitM system 20 cannot hide itself. Assuming the MitM system 20 needs around 500us for packet processing, the total processing time introduced by the MitM system 20 is 500us for forwarding the message in step S530 and 500us for forwarding the message in step S540. In addition to these processing times, the RUE 10 will introduce some processing time. A successful MitM detection can be achieved by forcing the delay between PDCCH and PUSCH to be smaller than or equal to 1ms. In practice, this means that out of the default table (see 6.1.2.1.1-2 in TS 38.214-g30) only row index 0 to 7 could be allowed for all SCS configurations. If the table is customized and sent by the RBS 30, then the maximum delay should be below 1ms.

For dynamic scheduling and configured grant Type 2 a DCI message (Clause 7.3 of TS 38.212-g10) may be used to carry control information required for the scheduling of the uplink resources. For scheduling resources on the uplink channel (PUSCH) the DCI formats may be 0_0, 0_1 and 0_2. The time domain resource alignment can be used as a parameter. This 4-bit field as well as the details of the resource allocation in the time domain are further described in Clause 6.1.2.1 of TS 38.214-g30. This field provides an index for the time domain resource allocation table. The time domain resource allocation table can be pre-configured or shared via the information element (IE) *pusch-TimeDomainResourceAllocation* (Clause 6.3.2 in TS 38.331-g20) in the RRC message *puschConfigCommon* (sent via SIB1 or dedicated RRC signaling) or *pusch-Config* (sent via dedicated RRC signaling). The applicable table for each case is described in table 6.1.2.1.1-1 in TS 38.214. The default table is described in 6.1.2.1.1-2 of TS 38.214-g30 and one can see that K2 is always greater than 0 for the default table. If the table is sent by the RBS 30 it may be conveyed in the IE *pusch-TimeDomainResourceAllocation* which consists of:

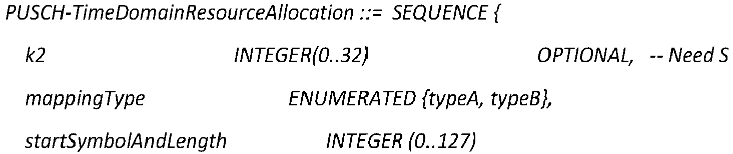

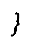

The above data representation together with the NR numerology described in table 4.3.2-1 of TS 38.211 result in the following:
- Any PUSCH scheduling will happen, regardless of the time domain resource allocation table used (default or sent by RBS 30), at most 32ms later than the DCI message sent on PDCCH;
- The minimum delay between PDCCH and PUSCH that can be scheduled if the default time domain resource allocation table is used is 0.375ms for SCS 120kHz. If 15kHz is used, the minimum delay is 1ms. In case the RBS 30 sends its own table this can be completely different, but the RBS 30 could be aware of its implications.

Taking into account above consideration and also the remarks regarding the timing advance, an example for the second or other embodiments may involve SCS=15kHz with a minimum delay of 1 ms.

In the following, a third embodiment is described. Contrary to the above embodiments where the RUE 10 is required to immediately reply to the resource allocation message, the third embodiment does not require an immediate answer by the RUE 10.

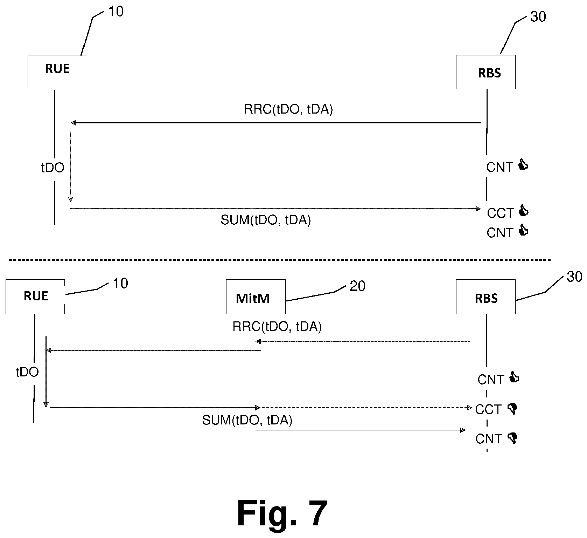

Fig. 7 schematically shows a signaling and processing diagram of an FBS detection procedure according to a third embodiment. Again, the upper part of Fig. 7 above the dotted line shows the procedure without MitM attack and the lower part of Fig. 7 below the dotted line shows the procedure with MitM attack.

The upper part of Fig. 7 shows the operation without MitM attacker where an RRC message is used for the allocation of resources. The RUE 10 has to wait a required time (e.g. time domain offset) and then replies in a protected message with the allocated resources. The lower part of Fig. 7 shows how the solution allows the RBS 30 to detect the MitM attacking system 20 since the expected message is received later than expected.

In the example of Fig. 7, configured grant type 1 scheduling is used. However, similar ideas are applicable to other scheduling approaches as long as an attacker is not enabled to learn about the allocated resources. E.g., allocated resources are exchanged in a confidential way, e.g., by applying encryption.

In the third embodiment, the proposed randomization of resource allocation can be achieved by adapting the RBS 30 to distribute randomized allocated resources to the RUE 10 in a secure manner and to subsequently monitor that the RUE 10 does not send data at other resources (e.g. times and/or frequencies) and that at the allocated resources (e.g. times and/or frequencies) the RUE 10 delivers a predetermined message.

Regarding the secure exchange of scheduling information in 5G systems, scheduling is transmitted in a physical downlink control channel (PDCCH) in all cases except uplink (UL) configured grant (CG) (type 1 and 2) that is sent encrypted in an RRC message. In UL CG type 2, the schedule is activated with a DCI message. Information exchanged over the PDCCH is scrambled according to a scrambling logic for the PDCCH, as defined in section 7.3.2.3 of the 3GPP specification TS 38.211. The logic for pseudorandom sequence generation (i.e. gold code) is described in section 5.2.1 thereof.

Since a secure exchange of data is required, uplink configured grant schedule type 1 distributed in a secure way in an RRC message can be used in an example.

As shown in Fig. 7, what is allocated in this RRC message *RRC(tDO, tDA)* transmitted from the RBS 30 to the RUE 10 are resource allocation fields for a time domain offset tDO and a time domain allocation tDA.

In response to the receipt of the RRC message *RRC(tDO, tDA),* the RUE 10 activates the configured grant after expiry of the time domain offset tDA configured by this parameter by sending a secure uplink message *SUM(tDO, tDA)* to the RBS 10.

The time domain offset field may provide a time domain offset tDO relative to SFN=0.

Furthermore, a value 'm' for the time domain allocation tDA of the time domain allocation field may point to a row or column number 'm+1' within at least one resource allocation look-up table that may be provided e.g. by the randomizer 25 of Fig. 2.

Specific rules may be used to determine which resource allocation look-up table shall be used.

In such a type of resource allocation, once the network configures a time-domain resource using RRC, the only way to change the allocation is by re-configuring the parameters by sending another RRC reconfiguration message to the RUE 10.

Further details about configured grant schedule type 1 and type 2 configuration by RRC signaling can be gathered from section 5.8.3 of 3GPP specification TS 38.321.

Additionally, further details about the data structures of the configuration parameters involved in the third embodiment can be gathered from 3GPP specification TS 38.331. In particular, this information may be encoded in the *rrc-ConfiguredUplinkGrant* structure where tDO corresponds to *timeDomainOffset* parameter and tDA corresponds to the *timeDomainAllocation* parameter. Note that other fields in this structure, even if not described here, might also allow for a similar randomization technique, e.g., the *frequencyHoppingOffset* parameter or the *frequencyDomainAllocation* parameter.

Details on *timeDomainAllocation* can be found in TS 38.212-7.3.1 and TS 38.214-6.1.2.1.

With the mechanism of the third embodiment, the MitM attacking system 20 cannot predict when the RUE 10 is going to transmit data, as long as the allocated resources follow a random looking pattern. This is achieved by adapting the RBS 30 to select a random time domain offset tDA, e.g., following a uniform random distribution. The other parameters such as time domain allocation tDA or frequency domain allocation fDA can be randomized as well.

If the time domain offset tDO is randomized, the RUE 10 transmits the predetermined reply message *SUM(tDO, tDA)* at a time SFN=tDO. Then, the RBS 30 can monitor that no message is received from the RUE 10 before or after the time domain offset TDO and can verify that the RUE 10 only transmits the predetermined reply message *SUM(tDO, tDA)* at the time domain offset.

As shown in the upper part of Fig. 7, the RBS 30 can check that no transmission occurs during the time domain offset tDA (upper "CNT" in Fig. 7), that the reply message *SUM(tDO, tDA)* is received at the correct time (and the correct frequency) ("CCT" in Fig. 7) and that no transmission occurs after the correct time (lower "CNT" in Fig. 7).

In the upper part of Fig. 7 without MitM attack, all checks are positive (thumb up), since the MitM attacking system 20 is not involved.

However, in the lower part of Fig. 7, the involvement of the MitM attacking system 20 introduces additional delay, so that the reply message *SUM(tDO, tDA)* from the RUE 10 is received at the RBS 30 at a later time. As a result, the first check (upper "CNT" in Fig. 7) of the RBS 30 concerning no transmissions during the time domain offset tDO is affirmative (thumb up), while the second check concerning correct time of receipt ("CCT" in Fig. 7) and the third check (lower "CNT" in Fig. 7) concerning no transmission after the correct time of receipt are both negative (thumb down). Consequently, the RBS 10 detects an RBS or MitM attack and may apply corrective or counter measures.

This procedure (i.e. MitM detection and avoidance phase) can be repeated multiple times, directly after security establishment or at different times to ensure that no MitM attacking system is present. This procedure can also be repeated when moving (and requiring hand-over).

To further increase the security, the RUE 10 can transmit specific contents at the allocated time slot (SFN=tDO). For instance, the RUE 10 can transmit the allocated resources, in particular, the time domain offset tDO in a secure way (e.g. confidentiality and integrity protected). In this way, the RBS 30 not only checks that the RUE 10 transmits at the randomly allocated time/frequency resource, but also that at that allocated time/frequency resource, the allocated resources are confirmed by the content of the received message. Other information that could be exchange may include a nonce (e.g. an arbitrary (random or pseudo-random) number) that has been received before from the base station and whose value is specific for the used resources.

This simple check at the RBS 30 can be done a single time or multiple times after security establishment when the RUE 10 connects to the network or after handover.

In an example, the third embodiment can be made more resilient to FBS or MitM attacks by including in the reply from the RUE 10, next to the time domain offset, also a time difference between the reception of the first message at the RUE 10 in Fig. 7 and the sending of the second message from the RUE 10 in Fig. 7. This time difference may be computed by the RUE 10, e.g., by computing the time difference between the time domain offset and the current SFN or by starting an independent timer (e.g. that counts CPU cycles) when the first message from the base station has been received and stopping the timer when the second message is to be sent. The transmitted time could be measured in seconds (milliseconds, microseconds) by multiplying the number of CPU cycles by the CPU clock time. If this is done, then the following FBS or MitM attack becomes more difficult. The MitM attacking system 20 could try to shift the timing of its SFN clock slightly ahead of the SFN clock of the RBS 30 so that the RUE 10 replies earlier to the MitM attacking system 20 and the MitM attacking system 20 can then forward the reply to the RBS 30 at the right point of time. However, if the reply also includes the time difference between both messages, the RBS 30 can notice that the RUE 10 is working under a different SFN clock.

Note that this technique in which the time difference between the reception of the first message (for resource allocation) and the sending of the second message (acknowledging this resource allocation) is measured can also apply if the time domain offset is not randomized but fixed. This is because the MitM system 20 is going to introduce a computational/communication overhead which is too big, and the response message (second message) will arrive too late. For instance, if a message is transmitted with a subcarrier spacing of 15 kHz, then the transmission of an OFDM symbol takes 66.67ms. If 7 symbols are allocated for the transmission of a message, then the transmission of the message (on the Physical layer) takes 0.467 ms. If this is done in both UL and DL directions, the MitM system 20 will incur a delay of almost 1ms without considering any computational delay. If the RBS 30 performs the resource allocation for a given RUE 10 at the beginning of a slot (that includes 14 OFDM symbols) so that the data transmission from the RUE 10 to the RBS 30 is done at the beginning of the following slot (i.e. 1 ms later), then the presence of the MitM system 20 will prevent this protocol from working as expected. Note that the message performing resource allocation is protected (encrypted/integrity protected) so that the MitM system 20 cannot send a fake message at an earlier time. Moreover, the protocol could take into account transmission delays for which considerations as for timing advance also apply.

Furthermore, the time difference between the reception of the first message and the sending of the second message at the RUE 10 may be smaller than the difference of the time of sending the first message from the RBS 30 and the time of receiving the second message at the RBS 30. This time difference - that should be corrected by the RBS 30 - is due to the propagation time of a message and is then equal to the double of the RBS-to-RUE propagation time, i.e., it is related to the timing advance. In this regard, similar considerations as in the second embodiment apply to make sure that the present third embodiment is resilient against a potential manipulation of the timing advance.

Note that to increase the security of the third embodiment, the RBS 30 might apply an additional random waiting time before sending the initial message in Fig. 7, as done in the second embodiment.

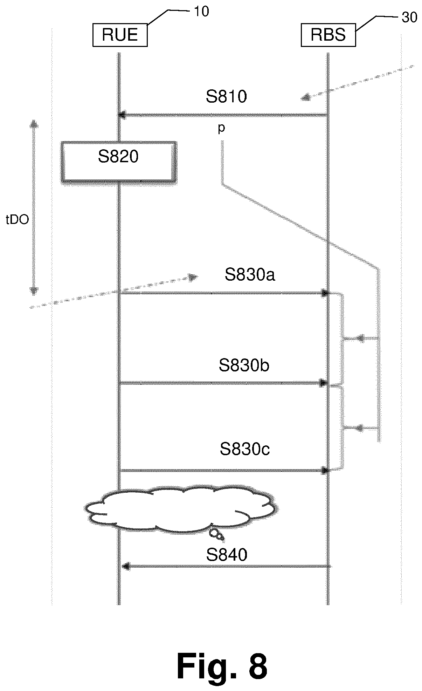

Fig. 8 schematically shows a signaling and processing diagram of an implementation example of the FBS detection procedure according to the third embodiment.

In this implementation example, configured grant scheduling type 1 is used, where the first message from the RBS 30 to the RUE 10 in step S810 distributes the configured schedule with a random time domain offset tDO and a periodicity in an RRC message. Furthermore, the RBS 30 activates a timer operation in accordance with the time domain offset tDO. The timer duration may be a bit longer than the time domain offset tDO but smaller than the time domain offset plus the periodicity.

In response to the receipt of the first message, the RUE 10 sets and activates a timer operation in step S820 to wait for the expiry of the random time domain offset tDO that has been precomputed by the RBS 30 and that has been distributed to the RUE 10 in the first message. Furthermore, the RUE 10 monitors a physical downlink control channel (PDCCH) for any receipt of a further message.

After expiry of the time domain offset tDO, the RUE 10 sends in step S830a a second message, namely a secure message (e.g. an RRC message transmitted via a physical uplink shared channel (PUSCH)) including the received time domain offset tDO and also the time difference between the reception of the first message and the sending time of the second message. The RBS 30 includes a logic (e.g. detector unit 22 of Fig. 2) for detecting an FBS or MitM attack in the RRC layer, that includes a predefined timer (set to the value of the time domain offset value tDO). The logic of the RBS 30 may further check if a message has been received before the timer expires. Moreover, if a message arrives, then the logic of the RBS 30 checks if the received message contains the correct value of the time domain offset tDO and the correct time difference between reception of the first message in step S810 and sending of the second message in step S830a. If the logic of the RBS 30 cannot verify this information, the RBS 30 determines the presence of an FBS or MitM attack. If the RBS 30 does not receive any message, then the RBS 30 also determines the presence of an FBS or MitM attack.

The periodicity received in step S810 determines the time period at which the RUE 10 can send further messages in subsequent steps S830b, S830c etc. Further details about the periodicities which depend on the configured subcarrier spacing can be gathered from 3GPP specifications TS38.321 and TS 38.331.

Finally, in step S840, the RBS 30 responds to the RUE 10 with a downlink control information (DCI) transmitted via the PDCCH channel and including a cell-based radio network temporary identity (C-RNTI) and a configuration schedule which may have been overwritten based on the response received from the RUE 10.

In the following, a fourth embodiment is described, where a randomized schedule is exchanged in a confidential manner.

In the fourth embodiment, the RBS 30 sends the scheduled resources to the RUE 10 in an encrypted manner so that only the RBS 30 and the RUE 10 know which time/frequency resources should be used in the transmission/reception of data. Furthermore, resource allocation is randomized in the sense that an attacker cannot easily predict the time slot or frequency range assigned to the RUE 10.

To this end, the RBS 30 may apply a secure random generator to obtain a random seed. This seed can then be used to derive a pseudo-random sequence in a secure way, e.g., by using SHAKE, part of SHA3. Alternatively, any secure pseudo random number generator might be used. Given this pseudo random sequence, prs, where prs[n] indicates the n-th bit in the pseudo random sequence, and assuming (as an example) that the RBS 30 has two potential time slots {s_0, s_1} for the RUE 10, the RBS 30 assigns s_prs[n] at time n. The RBS 30 can obtain the seed and send it to the RUE 10 together with {s_0, s_1} in an encrypted and optionally, integrity protected, manner. At time n, the RUE 10 will then use s_prs[n]. An alternative to this is that the RBS 30 computes a pseudo random sequence prs directly and sends it to the UE in a protected way. At time (or transmission number) n, the RUE 10 and RBS 30 will then use s_prs[n]. The advantage of this alternative is that the RUE does not require additional extensions to derive the pseudo random sequence from a seed.

In this example of the fourth embodiment, the MitM attacking system 20 can be able to observe that the RUE 10 uses both time slots s0 and s1, but the MitM attacking system 20 is not aware of the slot assigned by the RBS 30 to the RUE 10 at a specific time n. The MitM attacking system 20 can only forward in both time slots s0 and s1 the same information, however, this can be easily monitored by the RBS 30, allowing for its detection. If the time slots s0 and s1 are reused between the users, this will also lead to reception and decryption errors at the RBS 30.

When configured grant scheduling is used, RRC messages can be used to exchange this information in a secure way. Dynamic scheduling does not use encryption during resource allocation, and thus, applying this embodiment to dynamic scheduling requires encrypting these messages.

This embodiment has been described in terms of the uplink communication path so that the MitM is detected by the RBS 30. However, this and other embodiments are also applicable to the downlink communication path so that the role of detecting the MitM is at the RUE. In particular, the RUE might determine the pseudo random sequence prs and send it to the RBS in a protected message, e.g., RRC. Triggered by this message, the RBS allocates transmission resources for the downlink, e.g., using semi-persistent schedule, in which two time slots {s_0, s_1} can be used. Next, the RBS transmits at time n using s_prs[n]. The RUE is in charge of detecting the presence of the MitM by checking whether the transmission is performed properly in the allocated time slot s_prs[n] at time n.

According to a fifth embodiment, a randomized radio network temporary identity (RNTI) is used for randomizing resource allocation during a communication link.

The RNTI is an n-bit identifier, e.g., n=16, used to identify the communication link between the RUE 10 and the RBS 30. Its value depends on the type of RNTI and remains relatively stable for a given purpose.

There are many types of RNTIs depending on the purpose, e.g., paging, broadcast, or type of resource allocation. Examples are SI-RNTI (System Information RNTI), P-RNTI (Paging RNTI), RA-RNTI (Random Access RNTI), TC-RNTI (Temporary Cell RNTI), C-RNTI (Cell RNTI), MCS-C-RNTI (Modulation Coding Scheme Cell RNTI), CS-RNTI (Configured Scheduling RNTI), TPC-PUCCH-RNTI (Transmit Power Control-PUCCH - RNTI), TPC-PUSCH-RNTI (Transmit Power Control-PUSCH - RNTI), TPC-SRS-RNTI (Transmit Power Control-Sounding Reference Symbols - RNTI), INT-RNTI (Interruption RNTI), SFI-RNTI (Slot Format Indication RNTI), and SP-CSI-RNTI (Semi-Persistent CSI RNTI).

According to the fifth embodiment, the RNTI used on the communication link between the RUE 10 and the RBS 30 during communication keeps changing - for each allocated transmission -- in a randomized way that is only known to the RUE 10 and the RBS 30. The key idea in this embodiment is that at each different time unit, e.g., a subframe or a slot, a different network identifier is allocated, only known to the RUE 10 and the RBS 30. If the MitM system 20 is in the middle and takes any time to forward the message in the UL/DL transmission paths, the validity of the network identifier expires. To successfully forward it further, the MitM system 20 would need to know the next one in advance, but it is only released on demand by the RUE 10 or when allocated by the RBS 30. This can be achieved by the following alternative options:

According to a first option, the RBS 30 prepares and sends a list of random RNTIs to the RUE 10 in a confidential manner. Note that a list is defined as a data type that represents a countable number of ordered values. The values in the list/data type may include some timing/expiration information for each value. Then, during communication, the RUE 10 uses a different RNTI (selected from the received RNTI list) in each subsequent allocated transmission. If the receiving party receives a message with a wrong RNTI, e.g., the previous one in the list, then this gives an indication of the presence of the MitM system 20 that can be used to detect its presence and avoid it.

The first option can be implemented by distributing the list of RNTIs with N entries over a secure channel, e.g., RRC, after access stratum security has been established. This RNTI list can be used, e.g., with dynamic scheduling, that uses C-RNTI. In this setting, if the RUE 10 receives a DCI message for dynamic resource allocation using its C-RNTI and the RUE 10 has a non-empty RNTI list, the RUE 10 uses the next element in the RNTI list in the transmission, instead of its C-RNTI. Alternatively, the RBS 30 may use the next element in the RNTI list of the RUE 10 when sending the DCI message. In this way, only the target RUE 10 knows which resources have been allocated to it, and only the target RUE 10 will reply in those allocated resources. Note that RNTI might not be transmitted explicitly, but it might be used to scramble the message or a cyclic redundancy code (CRC) of the message (e.g., TS 38212-7.3.1.1).

According to a second option, the RBNS 30 generates a seed and sends it to the RUE 10 in a confidential manner. The seed is then used by the RUE 10 to derive pseudo-random RNTIs for each transmission. The RNTIs can be derived by means of a pseudo-random number generating function. An advantage of the second option is that it is a more compact approach.

According to a third option, the RBS 30 prepares and sends two lists of RNTIs to the RUE 10 in a confidential manner. Then, during communication, the RBS 30 uses elements of the first list of RNTIs to allocate resources to the RUE 10 and the RUE 10 uses elements of the second list of RNTIs in each transmission.

The third option is similar to the first option and the list of RNTIs can be distributed, e.g., in an RRC message. DCI messages will use RNTIs of the first list of RNTIs. Then, only the target RUE 10 knows for which UE those resources have been allocated. When the RUE answers 10, it answers with the next RNTI listed in the second list of RNTIs so that only the RBS 30 knows to which UE that data transmission belongs. Two lists help to minimize the risk of linking the communication in the downlink and uplink. An MitM knows which RNTI is used to allocate resources in the downlink, but the MitM does not know which RNTI will be used in a transmission in the uplink. The consequence of this construction is that the MitM attacking system 20 in between the RUE 10 and the RBS 30 does not know (i.e. cannot predict) how to trigger a data transmission from the RUE 10 since the FBS 23 of the MitM attacking system 20 does not know the UE's RNTI lists. The FBS 23 also does not know which RNTIs the UEs are using in their later communication links, so the FBS 23 does not know how to forward/manipulate messages, or may be too late to do so. It should be noted that in this case the resources allocated to the RUE 10 could even remain stable (e.g., periodic time slots, same frequency ranges) while the RNTI is changed. The MitM attacking system 20 could still try to delay/cache data packets of the communication and retransmit it in those same periodic time slots and frequency ranges. However, in this case, the RNTI used (from the RNTI list) is also delayed, and this also gives a hint to the RBS 30 about the presence of an FBS or MitM attack.

If the solution according to the third option of the fifth embodiment is used, the RBS 30 may distribute the two lists of RNTIs to several UEs and observe whether the communication link performs as before or whether the communication link is interrupted. The latter case indicates of the presence of an FBS or MitM attack and the RBS 30 can inform the RUE 10 and/or the network. It is a decision of the RUE 10 to keep the communication at the risk of potential FBS or MitM attacks or to connect to a different RBS with the hope that no MitM attacking system is located in between.

In summary, the idea in this embodiment is to make sure that the fake base station cannot easily manipulate the transmission of the RUE and the RBS. To this end, it is proposed to use a predetermined RNTI for scrambling the subsequent messages between RUE and RBS by sending at least a list of RNTIs (or the seed to generate it) securely beforehand to the RUE using a protected (RRC) message from the RBS to the RUE. In conjunction with sending such a list, the RUE could be provided with a policy (e.g. pre-configured policy or included/triggered by the secure message that includes the sequence or a separate secure message) to only accept subsequent messages if these are scrambled with an RNTI that exactly matches the RNTI from the sequence of RNTI values that was sent securely beforehand and may stop the procedure, since it would be too risky to continue given that the message may have been compromised. The RNTIs in the list should be used at predetermined instants of time, or sequentially with the allocated transmission/reception slots. Of course, since scrambling affects the CRC, this may only work when the signal quality is very good, so this policy may be conditional on the signal quality (e.g. RSRP) being above a certain threshold, and only during a dedicated time interval for checking for false base stations. Normally if the CRC or RNTI would not match, the UE would discard the message or may request retransmission of the message. This should not happen during the time interval of detecting false base stations.

Note that a FBS may try to simply forward a message scrambled with an RNTI from the RBS, or manipulate that message (by determining the RNTI from the incoming message and creating a new message with new CRC scrambled with the determined RNTI), but this means the timing of that forwarded/manipulated message may come too late, in particular, when we consider both uplink and downlink paths. Using above mentioned policy during a dedicated interval for detecting false base stations prevents that the MitM can forward messages, or send messages beforehand to trigger the UE to respond or send a message before it has determined which next RNTI value the RBS will use. Given that a typical RNTI value only allows 65536 values, the FBS could do a lucky guess and send a message scrambled with the correct RNTI to the RUE. Using a sequence with multiple valid RNTI values, and requiring multiple messages (e.g. by sending some spurious messages after the initial RRC message, as mentioned earlier) during the message exchange during the interval for detecting false base stations makes it much harder for the FBS to guess each subsequent RNTI value right.

To summarize, in cellular or other wireless networks, FBS devices behave as proper base stations managed by the network operator and aim at attracting wireless communication devices with different goals including FBS or MitM attacks. To detect and/or avoid such FBS or MitM attacks, it is proposed to randomize resource allocation and check at the RBS that a wireless communication device (e.g. UE) has not transmitted in other resources and only transmits in the allocated resources.

While the invention has been illustrated and described in detail in the drawings and foregoing description, such illustration and description are to be considered illustrative or exemplary and not restrictive. The invention is not limited to the disclosed embodiments.

The above embodiments of the MitM detection and avoidance procedure can be repeated multiple times, directly after security establishment or at different times to ensure that no MitM attacking system is present. This procedure can also be repeated when moving (and requiring hand-over). In particular, the proposed procedures can start after a fixed event in the RBS once a secure connection with the RUE has been established. The procedure can start after the reception of a *trigger_MitM_detection_and_avoidance* message from the RUE. This applies to the first to third embodiments. Note that the first embodiment resembles a dynamic grant configuration, the second embodiment resembles a configured grant (CG) type 2 and the third embodiment resembles a configured grant (CG) type 1.

The *trigger_MitM_detection_and_avoidance* message may be e.g., an RRC protected message or a scheduling request (SR) conveyed using PUCCH format 0 or 1 as described in Clause 9.2.4 of TS 32.213-g10. To make the RBS aware that this SR is triggering the start of the MitM detection phase, two options may be contemplated. First, this message can include one bit to signal the start of the MitM detection phase, based on which the RBS can start the process for CG type 2, CG type 1 or dynamic grant. Second, it may be required that the first SR after RRC Security Mode Complete or any other well-known exchange between RBS and RUE after the communication is protected (> RRC Security Mode Complete) is used to signal the start of the MitM detection phase, based on which the RBS can start the process for CG type 2, CG type 1 or dynamic grant.

Note that following existing specifications might limit the maximum random delay applicable after reception of a *trigger_MitM_detection_and_avoidance* message, if it is of type Scheduling Request (SR). In particular, the RUE may be configured to re-send SR periodically for *sr-TransMax* (a field defined as part of the IE *SchedulingRequestConfig* in TS 38.331) number of times if the RUE does not receive grants from the RBS. The periodicity may be defined by the field *periodicityAndOffset* as part of the IE *SchedulingRequestResourceConfig.* The maximum periodicity is described in TS 38.331 and in Clause 9.2.4 of TS 32.213-g10. Considering the NR numerology, the maximum random delay with the current standard would be 80ms. If this random delay is not big enough when using SR messages, this might impact the likelihood of a MitM system correctly guessing the allocated resources. If this likelihood is too high, then the MitM detection and avoidance procedure, in any of the above embodiments, could be repeated multiple times until the MitM system's likelihood of guessing correctly becomes low enough.

In some solutions used to detect fake base stations, public-key cryptography is applied to ensure source authentication. In these solutions, the RBS or a network function in the core network sign the RBS system information. This means that the RUEs have knowledge of the public-key of either the RBS or network function. This public-key can be used by the RUE to protect a symmetric-key K that can be shared with the RBS in the *trigger_MitM_detection_and_avoidance* message. This *trigger_MitM_detection_and_avoidance* message can be sent by the RUE, e.g., once the RUE has acquired the MIB and SIB1 of a base station and verified its digital signature.

The solutions of the above embodiments can be combined.

Next to the main objective of detecting and avoiding MitM attacks, the proposed techniques can find other applications. For instance, it is known that devices can be profiled or even traced based on allocated resources. For instance, devices accessing different Internet resources also involve a specific communication traffic. If an attacker observes the allocated resources to a device, the attacker can infer which type of Internet resources the device is accessing. Another potential application might be about secure wake-up radio to prevent DoS attacks. If a specific identifier is used to wake-up a device, this might be used by an attacker to perform a DoS attack against that specific device, by waking it up till its battery is empty. These applications can be addressed by means of the techniques presented here, e.g., by means of the fourth and fifth embodiments.

Furthermore, the underlying principles also apply to other wireless systems in 3GPP and other standardization bodies. For instance, 3GPP is studying the usage of relay devices such as UEs or base stations in integrated access backhauled (IAB) networks to extend the range. In such use cases, a MitM attacker could also be located, e.g., between a remote UE and a relay UE. The MitM attacker can be detected and avoided in those settings by means of the proposed or similar techniques.

Moreover, the proposed enhanced detection and/or avoidance of MitM attacks can be implemented in all types of wireless networks where FBS or relays are used. E.g., it can be applied to devices communicating using cellular wireless communication standards, specifically the 3^{rd} Generation Partnership Project (3GPP) 5G specifications.

Thus, the wireless communication devices can be different types of devices, e.g. mobile phones, vehicles (for vehicle-to-vehicle (V2V) communication or more general vehicle-to-everything (V2X) communication), V2X devices, loT hubs, loT devices, including low-power medical sensors for health monitoring, medical (emergency) diagnosis and treatment devices, for hospital use or first-responder use, virtual reality (VR) headsets, etc.

Furthermore, the invention can be applied in medical applications or connected healthcare in which multiple wireless (e.g. 4G/5G) connected sensor or actuator nodes participate, in medical applications or connected healthcare in which a wireless (e.g. 4G/5G) connected equipment consumes or generates occasionally a continuous data stream of a certain average data rate, for example video, ultrasound, X-Ray, Computed Tomography (CT) imaging devices, real-time patient sensors, audio or voice or video streaming devices used by medical staff, in general loT applications involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication where relaying is used.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Figs. 3 to 8 can be implemented as program code means of a computer program and/or as dedicated hardware of the related communication device or access device, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for detecting an attack by a fake wireless device (23) that impersonates a genuine or real access device in a wireless network, wherein the apparatus comprises:
a randomizer (25) for randomizing an allocation of at least one communication resource and/or identifier used for communicating with a wireless communication device (10); and
an attack checking unit (22) for checking if transmissions received from the wireless communication device (10) have used the at least one communication resource and/or identifier allocated by the randomized allocation and for determining a presence of or an attack by a fake wireless device (23) based on a result of the checking.

2. The apparatus of claim 1, wherein the randomizer (25) is configured to compute at least one random parameter value in a respective predetermined value range and to allocate a time or frequency resource, in particular, a subsequent frame or a subsequent slot or a subsequent frequency range, for the communication with the wireless communication device (10) based on the computed at least one parameter value.

3. The apparatus of claim 1, wherein the randomizer (25) is configured to determine a random waiting time; wherein the apparatus is configured to send a resource activation message to the wireless communication device (10) after expiry of the random waiting time; and wherein the attack checking unit (22) is configured to check based on a timer function if a direct response from the wireless communication device (10) has been received.

4. The apparatus of claim 3, wherein the attack checking unit (22) is configured to check if the received direct response comprises a downlink control information included in the resource activation message.

5. The apparatus of claim 1, wherein the apparatus is configured to transmit the allocated at least one communication resource and/or identifier in a protected message.

6. The apparatus of claim 5, wherein the allocated at least one communication resource comprises at least one of a random time domain offset value, a random time domain allocation value and a random frequency domain allocation value to be used for a response by the wireless communication device (10).

7. The apparatus of claim 5, wherein the time domain offset value indicates a time offset relative to a system frame number, and wherein the attack checking unit (22) is configured to monitor that no response message is received from the wireless communication device (10) before or after the time offset.

8. The apparatus of claim 5, wherein at least one of the time domain allocation value and the frequency domain allocation value points to a row or column of a look-up table

9. The apparatus of claim 1, wherein the attack checking unit (22) is configured to perform the checking operation after a security establishment when the wireless communication device (10) establishes a secure connection with the wireless network or after a handover of the wireless communication device (10).

10. The apparatus of claim 1, wherein the randomizer (25) is configured to determine a random seed value to be forwarded to the wireless communication device (10) in a protected manner for assigning a communication resource, in particular a time slot or frequency range, for a response message based on a pseudo-random sequence.

11. The apparatus of claim 1, wherein the randomizer (25) is configured to determine at least one list of random temporary network identifiers or a random seed value for deriving random temporary network identifiers by means of a pseudo-random function, wherein the apparatus is configured to forward the at least one list of random temporary network identifiers or the random seed to the wireless communication device (10) in protected manner for selection of random temporary network identifiers in subsequent transmissions, and wherein the attack checking unit (22) is configured to determine the attack by a fake wireless device (23) based on a received random temporary network identifier.

12. The apparatus of claim 11, wherein the randomizer (25) is configured to determine a first list of random temporary network identifiers to be used by the wireless communication device (10) and a second list of temporary network identifiers to be used by the apparatus.

13. A network device (30) for a wireless network, comprising an apparatus according to any one of claims 1 to 12.

14. An attack detection system comprising a network device (30) according to claim 13 and a wireless communication device (10), wherein the wireless communication device (10) is configured to detect the allocated at least one communication resource and/or identifier and to apply the detected at least one communication resource and/or identifier for communication with the network device (30).

15. A method of detecting an attack by a fake wireless device (23) that impersonates a genuine or real access device in a wireless network, wherein the method comprises:
randomizing an allocation of at least one communication resource and/or identifier used for communicating with a wireless communication device (10); and
checking if transmissions received from the wireless communication device (10) have used the communication resources and/or identifiers allocated by the randomized allocation; and
determining a presence of or an attack by a fake wireless device (23) based on a result of the checking.
